# EUROPEAN PATENT SPECIFICATION

(11) **EP 2 984 234 B1**
(45) Date of publication and mention of the grant of the patent: **06.06.2018**
(21) Application number: 14717518.6
(22) Date of filing: 08.04.2014
(51) Int. Cl.: E01C 19/05, E01C 19/10

(54) **PROCESS FOR THE PREPARATION OF AN ASPHALT COMPOSITION**
VERFAHREN ZUR HERSTELLUNG EINER ASPHALTZUSAMMENSETZUNG
PROCÉDÉ DE PRÉPARATION D'UNE COMPOSITION D'ASPHALTE

(30) Priority: 08.04.2013 NL 2010587
(43) Date of publication of application: 17.02.2016
(73) Proprietor: Koninklijke BAM Groep N.V., 3981 AZ Bunnik (NL)
(72) Inventor: DEMMINK, Ernst W., NL-3526 KV Utrecht (NL); HUURMAN, Marinus, NL-3526 KV Utrecht (NL); JACOBS, Mathias M.J., NL-3526 KV Utrecht (NL); VAN DEN BEEMT, Cornelis M.A., NL-3526 KV Utrecht (NL)
(74) Representative: EP&C
(86) International application number: PCT/NL2014/050225
(87) International publication number: WO 2014/168478

(56) References cited:
- EP-A1- 0 046 827
- FR-A1- 2 937 059
- JP-A- 2002 079 136
- JP-A- 2008 208 606

## Description

The present invention relates to a process for the preparation of an asphalt composition, in particular to an asphalt composition wherein reclaimed asphalt material has been used.

In this specification by asphalt is understood the combination of bitumen and aggregates. Asphalt is sometimes referred to as asphalt concrete. Asphalt is generally used in road pavements, but other uses, e.g. in roofing felts and the like, are also possible.

There is an increasing need for road pavement based on asphalt. Asphalt from road pavement may generally contain from 3 to 8%wt bitumen, more generally 4 to 5%wt. The major part of asphalt is constituted of aggregates. The aggregates tend to be granular. The aggregates in asphalt commonly have a variety of dimensions and usually vary from coarse, e.g. with a minimum diameter of greater than 2 mm, and fine aggregates, e.g. with a maximum diameter of 2 mm. Finer filling material, e.g. having a maximum diameter of 63 µm may be defined as formally dosed artificial fines or as a separate form of aggregate. The largest aggregates do not have a maximum diameter that exceeds 32 mm. The aggregates are mixed together with the bitumen, spread and compacted, usually while being hot, to form a road pavement. Roads tend to age and when aged roads are being renewed, large quantities of reclaimed asphalt become available. From an environmental standpoint it is undesirable to dump the reclaimed asphalt as waste. Therefore, there is an increasing requirement to recycle reclaimed asphalt.

In practice, asphalt is already being reclaimed. In such a case typically lumps or pieces of reclaimed asphalt, that may optionally first be broken into granular pieces, are heated and mixed with fresh asphalt. Since the reclaimed asphalt comprises bitumen, the temperature to which the reclaimed asphalt may be heated is limited. If the temperature becomes too high the bitumen becomes sticky or even liquid so that the reclaimed asphalt will be difficult to handle or can even no longer be handled in an asphalt plant. Heating the reclaimed asphalt to such high temperature also results in a higher emission of volatile organic compounds, VOCs, and in more odour. The limited temperature may constitute a drawback since reclaimed asphalt generally contains a certain amount of moisture and must be dried before it can be re-used in the production of a new asphalt composition. Inter alia for this reason the proportion of reclaimed asphalt in asphalt compositions is in practice generally limited to about 50%wt.

An example of a known method for recycling asphalt is shown in a brochure by Metso Minerals Ltd (http://www.metso.com/miningandconstruction/MaTobox7.nsf/DocsBylD/ 97AC8AD8A245BCDBCC256C5CO080EB2B/$File/Aib031.pdf). This brochure shows how reclaimed asphalt is crushed in a cone crusher and subsequently screened over two sieves, one with a size of 50 mm and a one with a size of 12 mm. Any retained particle from any of the screens is passed to a crusher for regrinding so that a homogeneous pile of asphalt aggregates with a maximum diameter of 12 mm is obtained. It is evident that this process provides the feed for the recycle process as described above. Hence, when these asphalt aggregates are used, they pose serious limitations to the temperature to which they can be heated.

In US 3999743 a process for the recycling of reclaimed asphalt aggregates is described wherein reclaimed asphalt lumps are crushed and separated into coarse particles and fine particles, the coarse particles are heated in a hot temperature zone of a drying and heating drum, and the fine particles are heated in a cooler temperature zone of the same drum. The heated coarse and fine particles are combined and may be used in the production of an asphalt composition. A similar process is described in US 4096588. In these patent documents reference is made to the fact that finer particles contain more bitumen than the coarser particles.

However, it has been found that by crushing the lumps of reclaimed asphalt in a conventional way the bitumen content in the particles formed is still rather high. Therefore, such bitumen contents make it prohibitive to use these reclaimed aggregates in conventional rotatable dryer drums. The teachings of US 3999743 and US 4096588 do not provide a solution thereto, as is shown by the fact that the proposed processes have not been used in practice.

JP 2008208606 describes a process for manufacturing recycled aggregates by a cleaning step to remove fine particles using a wet classifier and a grinding step of the remaining aggregates for stripping off bitumen that is adhered to the aggregates. The grinding step is conducted in a grinding machine wherein aggregates are treated in the presence of water. It is generally known that grinding is accomplished by abrasion of material by the free motion of unconnected media such as rods, balls or pebbles. That is confirmed by JP 2008208606 showing that the grinding machine is operated by means of steel balls.

Although the method of this Japanese patent application provides coarse aggregates that may contain little bitumen, it also results in a waste of fine aggregates and recycled asphalt. This waste of fine aggregates and bitumen results in a loss of useful recycled material. Moreover, the method requires that the coarse aggregates are dried, which adds to the energy input for the recycling of these aggregates.

It has now been found that when the lumps of reclaimed asphalt aggregates are treated by means of impact instead of by using jaw crushers or cone crushers or grinding machines, and subsequently separated into at least a coarse fraction and a fine fraction, the aggregates in the reclaimed asphalt are not further crushed, and that the content of bitumen in the coarse fraction is significantly lower than the amount of bitumen in the fine fraction.

Grinding is usually performed wet to provide a slurry, whereas crushing is a dry process. Crushing is accomplished by compression of material against rigid surfaces, or by impact against surfaces in a constrained motion path, typically at high speed. By an impact is understood a force or shock applied for a short time period when two or more bodies collide. The force of the impact is suitably chosen so that the crushing of the aggregates themselves is minimized whilst the decomposition into the separate aggregates is optimized. This means that the lumps are allowed to collide with another body that has a different speed from the speed of the lumps. An example of equipment using impact, is e.g. a hammer mill.

It has been found that very good results are obtained when a different type of equipment for delivering impact is used, viz. a vertical shaft impact crusher. In this type a high-speed rotor is designed to throw lumps of material to a surface. In this way velocity is used rather than pressure to achieve siz e reduction. Utilizing velocity allows the size reduction to take place evenly. In this way the breaking occurs at the adhesion between coarse aggregates and bitumen, so that coarse aggregates that are substantially free from mastic particles are obtained, mastic being defined as a mixture of bitumen and fine aggregates with a maximum diameter of at most 2 mm. Without wishing to be bound by any theory, it is believed that via such a mechanism asphalt aggregates are obtained that contain very small amounts of bitumen and can be used in a conventional rotatable dryer drum, optionally in addition to conventional virgin mineral material. A main advantage of such a process resides in that the aggregates in the reclaimed asphalt lumps remain unaffected to a significant extent by the impact.

Via such a process reclaimed asphalt aggregates become available that are so lean on bitumen they that can be used in the preparation of new asphalt compositions that they can be used as normal virgin mineral material, to which they may be added.

Accordingly, the present invention provides a process for the preparation of an asphalt composition, comprising the steps:
a) heating reclaimed asphalt material that comprises reclaimed asphalt aggregates and recycle bitumen, wherein the amount of recycle bitumen is in the range of 0.1 to 2.5%wt, based on the weight of the reclaimed asphalt material;
b) heating fresh bitumen;
c) heating reclaimed asphalt, wherein the reclaimed asphalt comprises reclaimed asphalt lumps, wherein the amount of recycle bitumen is 3 to 8 %wt, based on the reclaimed asphalt;
d) mixing at least part of the heated reclaimed asphalt material obtained in step a) with at least part of the heated fresh bitumen obtained in step b) and with at least part of the heated reclaimed asphalt obtained in step c) to form the asphalt composition.

The present process allows the recycling of reclaimed asphalt in step c), which is environmentally friendly. In addition, it enables the recycling of reclaimed aggregates containing a small amount of recycle bitumen. In this way, the content of reclaimed components can easily be brought to a level of more than 50%wt of the asphalt composition that is being obtained. The present method provides a significant advantage over the process according to JP 2008208606 in that it allows the mixing of reclaimed asphalt in addition to reclaimed aggregates, thereby enabling the skilled person to increase the level of reclaimed asphalt in the eventual asphalt composition. The inventors of JP 2008208606 failed to acknowledge that by separately heating reclaimed asphalt the proportion of recycled material could be furterh enhanced.

As indicated above, reclaimed asphalt lumps typically consist of a combination of asphalt aggregates and recycle bitumen. The amount of recycle bitumen in reclaimed asphalt lumps is generally 3 to 8 %wt, based on the reclaimed asphalt. Bitumen and mastic, with mastic being defined as a mixture of bitumen and fine aggregates with a maximum diameter of at most 2 mm, show a temperature- and frequency-dependent behavior. At high frequencies these materials behave in a glass-like manner, implying that they show brittle behavior. By bringing the reclaimed asphalt lumps into collision with a surface the glass-like behavior is addressed as a result of the high frequencies that are at play at the instant of impact. The mastic separates from the stones to which it was adhered. The result is a fine fraction that contains most of the bitumen and a coarse fraction that only contains a limited amount of bitumen. By separating the reclaimed asphalt lumps into the reclaimed asphalt material that is used as starting material in step a) by means of equipment that uses impact, the bitumen content in the reclaimed asphalt material is brought down to a content of recycle bitumen of 0.1 to 2.5 %wt, and preferably to a recycle bitumen content of 0.1 to 1.5 %wt, more preferably, to a recycle bitumen content of 0.1 to 1.0 %wt. Since the major part of the aggregates that contain such low recycle bitumen content is generally the more coarse part of the reclaimed asphalt aggregates, the reclaimed asphalt material that is being used as starting material for step a) preferably has a maximum longest dimension of at least 1 mm, and more preferably has a maximum longest dimension in the range of 2.0 to 32 mm, and most preferably, has a maximum longest dimension in the range of 5.0 to 22.4 mm.

The reclaimed asphalt material can suitably be obtained by treating reclaimed asphalt lumps by means of impact. However, reclaimed asphalt material comprising reclaimed asphalt aggregates and recycle bitumen, wherein the amount of recycle bitumen is in the range of 0.1 to 2.5%wt, based on the weight of the reclaimed asphalt material has been obtained in a different way, this material can also be used in the process of the present invention. It is emphasized that such use is also covered by the present invention. Suitably, the reclaimed asphalt material has been obtained by subjecting lumps of reclaimed asphalt to decomposition by impact, e.g. in a centrifugal mill, and to subsequent sieving. As indicated above, grinding is usually performed wet to provide a slurry, whereas crushing is a dry process. Crushing is accomplished by compression of material against rigid surfaces, or by impact against surfaces in a constrained motion path, typically at high speed. Accordingly, the decomposition of the lumps of reclaimed asphalt by impact is suitably carried out without the addition of water. Since the presence of water does not provide any advantage, but merely adds to the energy input to render the aggregates suitable for re-use in other asphalt compositions, the decomposition of the lumps of reclaimed asphalt by impact is preferably carried out in the substantial absence of water.

In a centrifugal mill the lumps are accelerated and given a certain velocity that is used for the impact by means of a centrifugal force. The accelerated lumps are made to impact on an impact wall. Advantageously, the impact wall is a solid wall of the housing of the centrifugal mill or a layer of crushed reclaimed asphalt aggregates. The skilled person can adjust the configuration of the centrifugal mill (e.g. speed and the angle of impact) to achieve the optimal result.

A suitable centrifugal mill has been described in EP1335794. This mill comprises a twin-chamber rotor that is mounted in a centrifugal mill housing. Reclaimed asphalt lumps are fed into the rotor, accelerated and hurled to the outside. The lumps or blocks are thrown against a wall of the housing that serves as anvil. Alternatively, the solid material is thrown against a layer of particles that have been passed through the rotor before. By varying the rotor speed and the angle of impact, and by selecting the anvil or the layer of particles as impact wall for the reclaimed asphalt lumps, the skilled person can determine the optimal crushing strength for the reclaimed asphalt lumps. In this way the skilled person is able to optimize the breaking up of the lumps of reclaimed asphalt into coarse and fine particles, wherein the skilled person can minimize the breaking of the aggregates in the reclaimed asphalt.

The separation of the reclaimed asphalt aggregates into at least a coarse fraction and at least a fine fraction is preferably conducted by means of one or more sieves. By using the appropriate sieves, the skilled person may separate the reclaimed asphalt aggregates into the desired number of fractions. It may be advantageous to separate the reclaimed asphalt aggregates into three or more fractions. For instance, a very coarse fraction with particles having a maximum size of more than about 20 to about 50 mm can be separated. Such a fraction may suitably be recycled to the impact treatment. The separation may also be conducted such that another coarse fraction containing particles with a maximum diameter between about 2 mm and about 25 mm, is obtained which is recovered as the coarse fraction according to the invention. A fine fraction having particles with a maximum diameter of 2 mm, may suitably be recovered as the fine fraction according to the invention. The skilled person will understand that more fractions may be separated, e.g. a very fine fraction with particles having a maximum diameter of 50 to 90 µm, e.g. 63 µm. Such a fraction may be considered dust. The skilled person will also realize that the separation between the fractions may be applied differently; the cut may be e.g. at 1 mm and at 22 mm. It is possible to use the standard sieves that are commonly applied in the industry, which include 63 µm, 125 µm, 500 µm, 1 mm, 2 mm, 4 mm, 5.6 mm, 8 mm, 11.2 mm, 16 mm, 22.4 mm and 45 mm. Standard sieves have been mentioned in standard EN13043.

The reclaimed asphalt material is heated in step a). Due to the low bitumen content the reclaimed asphalt material may be heated to high temperatures to ensure that the material is thoroughly dried whereas the aggregates remain free-flowing because of the low bitumen content. Also the risk of smoke formation and coke formation is relatively small. Therefore, the reclaimed asphalt material is heated to a temperature of at least 130 °C, preferably at least 150 °C. In order not to increase the chance of coke or smoke formation, the heating temperature of the reclaimed asphalt material will generally not exceed 240°C, preferably not exceed 200 °C.

The reclaimed asphalt material may be mixed with virgin mineral material. The mixing with this virgin mineral material may be carried out before, during or after the heating in step a). When it is mixed with virgin mineral material before heating the admixture obtained will on average contain less recycle bitumen which further reduces the risk of getting sticky at increased temperatures. When the mixing takes place after heating it has the advantage that the heating temperatures for both types of aggregates may be optimized, but it has the disadvantage that a separate dryer drum needs to be provided for the virgin mineral material. The mixing during heating has the advantage that only one dryer drum would suffice. A convenient way to achieve such mixing is by introducing virgin mineral material and reclaimed asphalt material at a different locations into a dryer drum, whereby the virgin mineral material is exposed longer to high air temperatures than the reclaimed asphalt material.

Such a dryer drum could be similar to the one shown in US 3999743. In such rotating dryer drum a flame and hot combustion gases are directed into an input end of the drum and the aggregates are moving concurrently with the combustion gases. The virgin mineral material and reclaimed asphalt material are introduced into the dryer drum at different locations, wherein the virgin mineral material is introduced close to the flame and the hot combustion gases, whereas the reclaimed asphalt material is introduced at a location downstream of inlet for the virgin mineral material. A drawback of this solution is that the temperature of the mixed product is rather low and the moisture in the reclaimed asphalt may not completely be removed. Alternatively, a dryer drum that is provided with a burner and that is similar to the counter-current drum of DE 3423521, can be used. The virgin mineral material and the reclaimed asphalt material are supplied separately into the rotating dryer drum and travel through the drum in counter flow to the burner. The virgin mineral material is exposed to the heating gases of the burner after entering the dryer drum, being moved towards the burner and heated. The reclaimed asphalt material is introduced to the dryer drum and added to the virgin mineral material via a different side inlet closer to the flame of the burner (but further away from the side inlet as mentioned in DE 3423521), but shielded from contact with the flame. In this way the optimal temperature of the reclaimed aggregates can be warranted and the bitumen in the reclaimed asphalt remains unaffected. In our invention the side inlet is substantially moved further away from the flame which is possible due to the fact that reclaimed asphalt is dosed with a lower amount of bitumen. The lower bitumen content prevents sticking of the reclaimed asphalt to the inside of the drum.

The virgin mineral material may comprise mineral material with a variety of dimensions. That has the advantage that whereas the reclaimed asphalt material may be of a coarser type, such as having dimensions in the range of 2 to 20 or 2 to 50 mm, the virgin mineral material may also comprise finer aggregates to ensure optimal filling of the asphalt composition, dependent on the desires of the skilled person and the envisaged application of the asphalt composition. Therefore, the virgin mineral material has preferably been selected from the group consisting of mineral material with a longest dimension of larger than 2.0 mm, mineral material with a longest dimension of 50 µm to 2 mm, and mixtures thereof.

The fresh bitumen that is used in the process according to the present invention can be any usual type of bitumen. Since asphalt production facilities tend to have a number of standard bitumen types available at the facilities, any of these types may be applied in the present process. Suitable bitumen types include those with a penetration up to 220 dmm, e.g. from 40 to 220 dmm, measured in accordance with EN 1426. The type of bitumen may also be varied in accordance with the properties of the recycle bitumen that is present on the reclaimed asphalt aggregates. Dependent on the hardness of the recycle bitumen that is contained in the reclaimed asphalt aggregates, the skilled person may opt for the selection of a rather soft bitumen. i.e. a bitumen with a high penetration. The skilled person may also select a polymer modified bitumen. In such a case the bitumen has been modified by the addition of one or more polymers. Such polymers may be elastomers, such as styrene butadiene rubber, styrene butadiene block copolymers, linear or star-shaped; styrene isoprene block copolymers, linear or star-shaped, and EPDM rubber (ethylene propylene diene monomer polymer). Alternatively thermoplasts may be added, such as, polyvinylchloride, ethylene vinyl acetate; copolymers of ethylene and methyl or butylene (meth)acrylate, polyethylene or atactic polypropylene.

Smooth mixing may be obtained by heating the fresh bitumen to 130 °C, preferably to a temperature of at least 150°C. In order to avoid smoke from the fresh bitumen and unnecessary costs, the maximum temperature of the fresh bitumen is generally 250°C.

If desired, a rejuvenating agent may be added to the mixing step d). There is a myriad of products that are presently being used and marketed as rejuvenating agents for the recycling of asphalt compositions. Such products are generally classified as flux oils, viscosity graded asphalt and a large variety of proprietary formulations. A potential rejuvenating agent is a shale oil modifier. Commonly used are crude oil fractions, preferably having a viscosity of at least 200 cSt at 60 °C, animal oils, vegetable oils and mixtures thereof. The use of relatively light crude oil fractions has an environmental drawback in that it evaporates and thus produces hydrocarbonaceous vapours that are undesirable from an environmental point of view. Therefore, the rejuvenating agent is preferably a vegetable oil, more preferably selected from soybean oil, sunflower oil, rapeseed oil, corn oil, peanut oil, olive oil, coconut oil, palm oil, palm kernel oil and mixtures thereof, more preferably palm oil or palm kernel oil. The use of such oils is more sustainable and since these oils show a low volatility, their use thus has an long-lasting effect on the asphalt.

The amount of rejuvenating agent in the asphalt composition to be prepared may vary within wide ranges. The most suitable amounts can be selected by the skilled person dependent on the hardness of the recycle bitumen in the reclaimed asphalt lumps and on the intended use of the asphalt composition. Typically the amount of rejuvenating agent may be in the range of 0.5 to 5.0 %wt based on the weight of the bitumen in the reclaimed asphalt material.

In view of the desire to recycle as much reclaimed asphalt as feasible, the present process also comprises a step of heating and admixing reclaimed asphalt. Since it is desirable to ensure that the reclaimed asphalt is dry, the reclaimed asphalt is subjected to heating in step c) of the process. Since the amount of bitumen in the reclaimed asphalt is in the range of 3 to 8 %wt and in order to avoid the occurrence of smoke and coking, the reclaimed asphalt in step c) is preferably heated to a temperature of at most 140 °C, preferably to a temperature in the range of 90 to 130 °C. In this way the temperature is sufficiently high for moisture to evaporate and not too high so that the risk of smoke and coke formation is very small.

The mixing in step d) may be effected in a variety of ways. It is possible to admix one component with one other component and subsequently combine the admixture obtained with the further component or components. Alternatively, it is possible to mix all components together. Since the desired asphalt composition may vary in proportions of the various components it is convenient to arrange for a particular amount of each of the components and then mix them together. In this way a thorough mixing is obtained. Therefore the step d) of the present process is preferably carried out by means of a method selected from:
- combining heated reclaimed aggregates obtained in step a), heated fresh bitumen obtained in step b) and heated reclaimed asphalt obtained in step c) simultaneously; - adding heated reclaimed asphalt obtained in step c) to a heated asphalt mixture obtained by combining heated reclaimed aggregates obtained in step a) with heated fresh bitumen obtained in step b);
- combining heated reclaimed aggregates obtained in step a) with heated reclaimed asphalt obtained in step c) and adding heated fresh bitumen obtained in step b) to the admixture obtained; and
a combination thereof.

In the preparation of the asphalt composition the skilled person will preferably apply such conditions as to temperature and optionally rejuvenating agent, that the kinematic viscosity of the mixed bitumen at the mixing of various components does not exceed 200 cSt at the mixing temperature. This ensures that the mixing of the reclaimed asphalt aggregates, the reclaimed asphalt and the fresh bitumen can be conducted smoothly, and that a homogeneous mixture is obtained.

Via this route asphalt compositions may be obtained that have an increased proportion of reclaimed asphalt components. The asphalt composition comprises not only a portion that consists of complete reclaimed asphalt, but is also comprises at least for a part a significant proportion of recycled aggregates in the form of the reclaimed asphalt aggregates and the recycle bitumen. In this way the skilled person now has a tool to increase the content of reclaimed asphalt if such is desired. Therefore, the content of reclaimed asphalt from step c) in the asphalt composition obtained in step d) may suitably be varied in the range of 5 to 95%wt, based on the weight of the asphalt composition.

The asphalt composition that is being produced by the process according to the present invention is preferably suitable for all conventional applications, including for road pavement. Therefore, the components in the asphalt composition are selected in such amounts that the resulting asphalt composition has at least a similar proportion of component as fresh asphalt. Therefore, the weight ratio of bitumen, including fresh bitumen and recycle bitumen, to aggregates, including reclaimed asphalt aggregates and, optionally, virgin mineral aggregates, in the asphalt composition is preferably in the range of 3:100 to 12:100.

The skilled person will know that asphalt compositions may comprise various additives. Such additives include adhesion promoters, such as amine compounds, lime and calcium hydroxide, anti-drainage additives, such as cellulose, glass fibres and rock wool, and dyes, such as iron oxide. Such additives may also be used in the asphalt compositions prepared according to the invention.

## Claims

1. Process for the preparation of an asphalt composition, comprising the steps:
a) heating reclaimed asphalt material that comprises reclaimed asphalt aggregates and recycle bitumen, wherein the amount of recycle bitumen is in the range of 0.1 to 2.5%wt, based on the weight of the reclaimed asphalt material;
b) heating fresh bitumen;
c) heating a reclaimed asphalt, wherein the reclaimed asphalt comprises reclaimed asphalt lumps, wherein the amount of recycle bitumen is 3 to 8 %wt, based on the reclaimed asphalt;
d) mixing at least part of the heated reclaimed asphalt material obtained in step a) with at least part of the heated fresh bitumen obtained in step b) and with at least part of the heated reclaimed asphalt obtained in step c) to form the asphalt composition.

2. Process according to claim 1, wherein the heated reclaimed asphalt material has a maximum longest dimension of at least 1 mm, and preferably has a longest dimension in the range of 2.0 to 50 mm.

3. Process according to claim 1 or 2, wherein the reclaimed asphalt material has a recycle bitumen content of 0.1 to 1.5 %wt, preferably 0.1 to 1.0%wt, based on the weight of the reclaimed asphalt material.

4. Process according to any one of claims 1 to 3, wherein the reclaimed asphalt material has been obtained by subjecting lumps of reclaimed asphalt to impact treatment, preferably in a centrifugal mill, and to subsequent sieving.

5. Process according to any one of claims 1 to 4, wherein the reclaimed asphalt material is heated to a temperature of at least 130 °C, preferably at least 150 °C.

6. Process according to any one of claims 1 to 5, wherein the reclaimed asphalt material is mixed with virgin mineral material before, during or after being heated in step a).

7. Process according to claim 6, wherein the virgin mineral material comprises mineral material with a variety of dimensions.

8. Process according to claim 6 or 7, wherein the virgin mineral material has been selected from the group consisting of mineral material with a longest dimension of larger than 2.0 mm, mineral material with a longest dimension of 50 µm to 2 mm, and mixtures thereof.

9. Process according to any one of claims 1 to 8, wherein the fresh bitumen is heated to a temperature of at least 130 °C, preferably at least 150 °C.

10. Process according to any one of claims 1 to 9, wherein the fresh bitumen has a penetration of up to 220 dmm.

11. Process according to any one of claims 1 to 10, wherein the reclaimed asphalt in step c) is heated to a temperature of at most 130 °C.

12. Process according to any one of claims 1 to 11, wherein the reclaimed asphalt is combined with the heated asphalt mixture according to step d) by means of a method selected from:
- combining heated reclaimed aggregates obtained in step a), heated fresh bitumen obtained in step b) and heated reclaimed asphalt obtained in step c) simultaneously,
- adding heated reclaimed asphalt obtained in step c) to a heated asphalt mixture obtained by combining heated reclaimed aggregates obtained in step a) with heated fresh bitumen obtained in step b);
- combining heated reclaimed aggregates obtained in step a) with heated reclaimed asphalt obtained in step c) and adding heated fresh bitumen obtained in step b) to the admixture obtained; and
a combination thereof.

13. Process according to any one of claims 1 to 12, wherein the content of reclaimed asphalt from step c) in the asphalt composition obtained in step d) is in the range of 5 to 95%wt, based on the weight of the asphalt composition.

14. Process according to any one of claims 1 to 13, wherein the weight ratio of bitumen, including fresh bitumen and recycle bitumen, to aggregates, including reclaimed asphalt aggregates and, optionally, virgin mineral material, in the asphalt composition is in the range of 4:100 to 8:100.

## Patentansprüche

1. Prozess zu der Herstellung einer Asphaltzusammensetzung, umfassend die Schritte:
a) Erhitzen von Ausbauasphaltmaterial, das Ausbauasphalt-Zuschlagstoffe und Wiederverwertungsbitumen umfasst, wobei die Menge von Wiederverwertungsbitumen in dem Bereich von 0,1 bis 2,5 Gew.-% beruhend auf dem Gewicht des Ausbauasphaltmaterials liegt;
b) Erhitzen von frischem Bitumen;
c) Erhitzen eines Ausbauasphalts, wobei der Ausbauasphalt Ausbauasphaltstücke umfasst, wobei die Menge von Wiederverwertungsbitumen in dem Bereich von 3 bis 8 Gew.-% beruhend auf dem Ausbauasphalt liegt;
d) Mischen wenigstens eines Teil des in Schritt a) erhaltenen erhitzten Ausbauasphaltmaterials mit mindestens einem Teil des in Schritt b) erhaltenen erhitzten frischen Bitumens und mit mindestens einem Teil des in Schritt c) erhaltenen erhitzten Ausbauasphalts, um die Asphaltzusammensetzung zu bilden.

2. Prozess nach Anspruch 1, wobei das erhitzte Ausbauasphaltmaterial eine maximale längste Abmessung von mindestens 1 mm aufweist und vorzugsweise eine längste Abmessung in dem Bereich von 2,0 bis 50 mm aufweist.

3. Prozess nach Anspruch 1 oder 2, wobei das Ausbauasphaltmaterial einen Wiederverwertungsbitumenanteil von 0,1 bis 1,5 Gew.-%, vorzugsweise von 0,1 bis 1,0 Gew.-%, beruhend auf dem Gewicht des Ausbauasphaltmaterials aufweist.

4. Prozess nach einem der Ansprüche 1 bis 3, wobei das Ausbauasphaltmaterial erhalten wurde, indem Stücke von Ausbauasphalt einer Schlagbehandlung, vorzugsweise in einer Zentrifugalmühle, und einem anschließenden Sieben unterzogen werden.

5. Prozess nach einem der Ansprüche 1 bis 4, wobei das Ausbauasphaltmaterial auf eine Temperatur von mindestens 130 °C, vorzugsweise von mindestens 150 °C, erhitzt wird.

6. Prozess nach einem der Ansprüche 1 bis 5, wobei das Ausbauasphaltmaterial mit neuem mineralischen Material gemischt wird, bevor, während oder nachdem es in Schritt a) erhitzt wird.

7. Prozess nach Anspruch 6, wobei das neue mineralische Material mineralisches Material mit einer Vielzahl von Abmessungen umfasst.

8. Prozess nach Anspruch 6 oder 7, wobei das neue mineralische Material aus der Gruppe bestehend aus mineralischem Material mit einer längsten Abmessung von größer als 2,0 mm, mineralischem Material mit einer längsten Abmessung von 50 µm bis 2 mm und Mischungen derselben ausgewählt wurde.

9. Prozess nach einem der Ansprüche 1 bis 8, wobei das frische Bitumen auf eine Temperatur von mindestens 130 °C, vorzugsweise von mindestens 150 °C, erhitzt wird.

10. Prozess nach einem der Ansprüche 1 bis 9, wobei das frische Bitumen eine Penetration von bis zu 220 dmm aufweist.

11. Prozess nach einem der Ansprüche 1 bis 10, wobei das Ausbauasphaltmaterial in Schritt c) auf eine Temperatur von höchstens 130 °C erhitzt wird.

12. Prozess nach einem der Ansprüche 1 bis 11, wobei das Ausbauasphaltmaterial mit der erhitzten Asphaltmischung nach Schritt d) kombiniert wird, mittels einer Methode ausgewählt aus:
gleichzeitiges Kombinieren in Schritt a) erhaltener erhitzter Ausbau-Zuschlagstoffe, in Schritt b) erhaltenen erhitzten frischen Bitumens und in Schritt c) erhaltenen erhitzten Ausbauasphalts;
Hinzufügen von in Schritt c) erhaltenem erhitzten Ausbauasphalt zu einer erhitzten Asphaltmischung, die durch das Kombinieren in Schritt a) erhaltener erhitzter Ausbau-Zuschlagstoffe mit in Schritt b) erhaltenem erhitzten frischen Bitumen erhalten wird;
Kombinieren in Schritt a) erhaltener erhitzter Ausbau-Zuschlagstoffe mit in Schritt c) erhaltenem erhitzten Ausbauasphalt und Hinzufügen in Schritt b) erhaltenem erhitzten frischen Bitumen zu der erhaltenen Beimischung; und
eine Kombination derselben.

13. Prozess nach einem der Ansprüche 1 bis 12, wobei das Gehalt des aus Schritt c) erhaltenen Ausbauasphalts in der in Schritt d) erhaltenen Asphaltzusammensetzung in dem Bereich von 5 bis 95 Gew.-% beruhend auf dem Gewicht der Asphaltzusammensetzung liegt.

14. Prozess nach einem der Ansprüche 1 bis 13, wobei das Gewichtsverhältnis des Bitumens, beinhaltend frisches Bitumen und Wiederverwendungsbitumen, gegenüber Zuschlagstoffen, beinhaltend Ausbauasphalt-Zuschlagstoffe und, optional, neues mineralisches reines Material, in der Asphaltzusammensetzung in dem Bereich von 4:100 bis 8:100 liegt.

## Revendications

1. Procédé de préparation d'une composition d'asphalte, comprenant les étapes de :
a) chauffage d'un matériau d'asphalte récupéré qui comprend des agrégats d'asphalte récupéré et du bitume recyclé, dans lequel la quantité de bitume recyclé est dans la plage de 0,1 à 2,5% en poids, sur la base du poids du matériau d'asphalte récupéré ;
b) chauffage de bitume frais;
c) chauffage d'un asphalte récupéré, dans lequel l'asphalte récupéré comprend des morceaux d'asphalte récupéré, dans lequel la quantité de bitume recyclé est de 3 à 8 % en poids, sur la base de l'asphalte récupéré ;
d) mélange d'au moins une partie du matériau d'asphalte récupéré chauffé obtenu à l'étape a) avec au moins une partie du bitume frais chauffé obtenu à l'étape b) et avec au moins une partie de l'asphalte récupéré chauffé obtenu à l'étape c) pour former la composition d'asphalte.

2. Procédé selon la revendication 1, dans lequel le matériau d'asphalte récupéré chauffé a une dimension maximale la plus longue d'au moins 1 mm, et de préférence a une dimension la plus longue dans la plage de 2,0 à 50 mm.

3. Procédé selon la revendication 1 ou 2, dans lequel le matériau d'asphalte récupéré a une teneur en bitume de recyclage de 0,1 à 1,5% en poids, de préférence de 0,1 à 1,0% en poids, sur la base du poids du matériau d'asphalte récupéré.

4. Procédé selon l'une quelconque des revendications 1 à 3, dans lequel le matériau d'asphalte récupéré a été obtenu en soumettant des morceaux d'asphalte récupéré à un traitement par impact, de préférence dans un broyeur centrifuge, et à un tamisage subséquent.

5. Procédé selon l'une quelconque des revendications 1 à 4, dans lequel le matériau d'asphalte récupéré est chauffé à une température d'au moins 130°C, de préférence d'au moins 150°C.

6. Procédé selon l'une quelconque des revendications 1 à 5, dans lequel le matériau d'asphalte récupéré est mélangé avec un matériau minéral vierge avant, pendant ou après avoir été chauffé à l'étape a).

7. Procédé selon la revendication 6, dans lequel le matériau minéral vierge comprend un matériau minéral de différentes dimensions.

8. Procédé selon la revendication 6 ou 7, dans lequel le matériau minéral vierge a été choisi dans le groupe constitué de matériau minéral ayant une dimension la plus longue supérieure à 2,0 mm, de matériau minéral ayant une dimension la plus longue de 50 µm à 2 mm et des mélanges ceux-ci.

9. Procédé selon l'une quelconque des revendications 1 à 8, dans lequel le bitume frais est chauffé à une température d'au moins 130°C, de préférence d'au moins 150°C.

10. Procédé selon l'une quelconque des revendications 1 à 9, dans lequel le bitume frais a une pénétration allant jusqu'à 220 dmm.

11. Procédé selon l'une quelconque des revendications 1 à 10, dans lequel l'asphalte récupéré à l'étape c) est chauffé à une température d'au plus 130°C.

12. Procédé selon l'une quelconque des revendications 1 à 11, dans lequel l'asphalte récupéré est combiné au mélange d'asphalte chauffé selon l'étape d) au moyen d'un procédé choisi parmi :
- la combinaison simultanée des agrégats chauffés récupérés obtenus à l'étape a), du bitume frais chauffé obtenu à l'étape b) et de l'asphalte récupéré chauffé obtenu à l'étape c),
- l'ajout de l'asphalte récupéré chauffé obtenu à l'étape c) à un mélange d'asphalte chauffé obtenu en combinant des agrégats récupérés chauffés obtenus à l'étape a) avec du bitume frais chauffé obtenu à l'étape b) ;
- la combinaison des agrégats récupérés chauffés obtenus à l'étape a) avec de l'asphalte récupéré chauffé obtenu à l'étape c) et l'ajout de bitume frais chauffé obtenu à l'étape b) au mélange obtenu ; et
une combinaison de ceux-ci.

13. Procédé selon l'une quelconque des revendications 1 à 12, dans lequel la teneur en asphalte récupéré de l'étape c) dans la composition d'asphalte obtenue à l'étape d) est dans la gamme de 5 à 95% en poids, sur la base au poids de la composition d'asphalte.

14. Procédé selon l'une quelconque des revendications 1 à 13, dans lequel le rapport pondéral de bitume, incluant bitume frais et bitume recyclé, aux agrégats, incluant des agrégats d'asphalte récupérés et, éventuellement, du matériau minéral vierge, dans la composition d'asphalte est compris dans la gamme de 4:100 à 8:100.
